# EUROPEAN PATENT SPECIFICATION

(11) **EP 2 763 866 B1**
(45) Date of publication and mention of the grant of the patent: **18.01.2017**
(21) Application number: 12780108.2
(22) Date of filing: 04.10.2012
(51) Int. Cl.: B60K 15/05, E05C 19/02, E05B 83/34

(54) **A DEVICE FOR CLOSING THE ACCESS COMPARTMENT OF A FILLER PIPE OF A CAR FUEL TANK**
EINRICHTUNG ZUM VERSCHLIESSEN DES ZUGANGSABTEILS EINES EINFÜLLSTUTZENS EINES KRAFTFAHRZEUGTANKS
DISPOSITIF POUR FERMER LE COMPARTIMENT D'ACCÈS D'UN TUYAU DE REMPLISSAGE D'UN RÉSERVOIR DE CARBURANT D'UN VÉHICULE AUTOMOBILE

(30) Priority: 05.10.2011 IT AN20110132
(43) Date of publication of application: 13.08.2014
(73) Proprietor: CEBI ITALY S.p.A., 12025 Dronero (CN) (IT)
(72) Inventor: PERSIANI, Luigi, 60027 Osimo (DE)
(74) Representative: Baldi, Claudio
(86) International application number: PCT/EP2012/069633
(87) International publication number: WO 2013/050478

(56) References cited:
- EP-A2- 1 295 748
- DE-A1-102008 057 860
- DE-A1-102009 060 119

## Description

The present patent application for industrial invention relates to an improved device for closing the access compartment of delivery pipes of car fuel tanks.

The device of the invention comprises a plastic molded, bowl-shaped support bottom provided with external shelf where a seat is obtained for a pivoting pin of the closing lid, with suitable shape and size to close the mouth of the bottom.

Since the bottom must be fixed inside the vehicle body, a flange is molded around the mouth of the bottom to act as stop and centering with respect to an insertion hole obtained on the body.

The device of the invention is provided with a lock of push-push type that can alternately and automatically provide hooking and unhooking of the lid when the lid is manually pressed against the bottom.

This sort of push-push locks are normally used in combination with safety latches operated by an electric actuator, which prevent the lid from being freely opened until said actuator remains in working condition. Normally, said actuator is automatically operated whenever the vehicle doors are closed with centralized control.

The market offers different models of devices with push-push lock in combination with a safety latch with automatic electrical operation.

The device of the invention is provided with an integrated "latch-actuator-lock" assembly applied directly on the outside of the bottom, so that the device can be mounted with one fixing operation only, which coincides with the fixing of the bottom to the vehicle body, which in such a case acts as support both for the bottom and the integrated "latch-actuator-lock" assembly. A device of this type, having an integrated "latch-actuator-lock" assembly applied directly on the outside of the bottom, is disclosed in patent IT1363917 of the same applicant.

The purpose of the present invention is to remedy a drawback of this type of devices of known type, according to which the push-push lock is provided, on the internal side of said closing lid, with a retention seat for the finned head of a rototranslating pin contained in a suitable housing and guide seat obtained in said integrated "latch-actuator-lock" assembly applied directly on the outside of the bottom. Said rototranslating pin can be in two stop positions, one position of complete extraction from the housing and guide seat, and one position of complete retraction inside said housing and guide seat.

During the extraction and retraction travels, said rototranslating pin respectively makes inverse rotations around its longitudinal axis by an angle equal to or lower than 90°.

In the position of maximum extraction, the finned head of said rototranslating pin is in such a position to be inserted into the retention seat obtained on the internal side of the lid. In view of the above, when the lid is pushed manually against the support bottom, immediately before the lid completes its closing travel, said finned head of the rototranslating pin is automatically inserted into the retention seat obtained on the internal side of the lid.

During the last part of said closing travel of the lid, the lid is pressed against said finned head, forcing the rototranslating pin to return inside its housing and guide seat, with consequent rotation of said finned head, which remains engaged into its retention seat, holding the lid closed.

At the end of the retraction travel, said rototranslating pin is hooked by a stop mechanism of known type - which is disclosed in the Italian patent No. 1363917 - and stabilized in its maximum retraction position. Said mechanism is adapted to automatically release the rototranslating pin when the lid is pushed again against the support bottom, after being closed. In such a circumstance said rototranslating pin is ejected out of its housing and guide seat by means of a return spring, with a new consequent inverse rotation of the finned head that returns to idle position, in correspondence of which said engagement with respect of the lid fails, and the lid can be rotated to its position of maximum opening.

When said rototranslating pin is at the end of its retraction travel, an actuator controlling a safety latch can be operated to mechanically inhibit the extraction travel of the rototranslating pin, thus preventing the accidental opening of the closed lid.

Said closing devices provided with push-push locks of known type are impaired by a drawback consisting in the fact that the push-push lock can also be actuated without pushing on the lid.

Let us suppose that accidentally, with the lid open, said rototranslating pin is manually pushed at the end of its retraction travel and successively the actuator controlling the operation of the safety latch is actuated. In such a circumstance, the position sensor associated with said safety latch would report the normal closing of the lid to the electronic control unit, and the driver would start the car off, being absolutely certain that the access compartment of the delivery pipe of the fuel tank is locked in closed position, whereas it is in fact completely open.

In addition to being inappropriate, starting the car off with open lid would be extremely dangerous if the fuel pump gun is still inserted in the delivery pipe of the fuel tank or, in the case of vehicles with electric engine, if the electrical socket is still inserted in the outlet.

DE 10 2009 060119 A1 discloses a device for closing the lid of the fuel tank of a vehicle according to the preamble of claim 1.

The purpose of the present invention is to remedy the drawback of the prior art by devising a new improved device for closing the access compartment of the delivery pipe of car fuel tanks, wherein it is impossible to accidentally actuate the push-push lock while the lid is open.

According to the improved closing device of the invention, the safety latch can be exclusively actuated on condition that said access compartment is closed by the lid.

Such a purpose has been achieved by the present invention, the main characteristics of which are disclosed in the first of the attached claims.

The resolutive idea at the basis of the present invention is substantially that of inverting the position of said hooking means (viz. said finned head) and retention means (viz. said retention seat) with respect to equivalent devices of the prior art.

More precisely, according to the device of the invention, said lid is provided on the internal side with a peg with finned head adapted to be inserted and hooked into a retention slot obtained on the tubular tip of a rototranslating pin contained in a cylindrical housing and guide seat obtained on the body of the push-push lock, which is in turn part of said integrated "latch-actuator -lock" assembly directly applied on the outside of the bottom.

The tubular tip of said rototranslating pin protrudes from the cylindrical seat acting as housing and guide of the pin by a length lower than the length of the backward travel that must be given to the rototranslating pin to actuate the stop lever mechanism of the push-push lock adapted to temporarily block the rototranslating pin at the end of the retraction travel.

Instead, the length of the peg with finned head is dimensioned in such way that, by pushing the lid towards its closing position, the peg penetrates inside said tubular tip and moves forward beyond the mouth of said cylindrical seat, in such way to push the rototranslating pin until it reaches its position of maximum retraction, in correspondence of which it is automatically blocked by said stop lever mechanism.

Evidently, during the backward travel of the rototranslating pin, said tubular tip undergoes a rotational movement around the peg, the finned head of which is therefore engaged in the retention slot obtained on said tubular tip, in such way to hold the lid closed.

For explanatory reasons the description of the improved closing device of the invention continues with reference to the attached drawings, which only have an illustrative, not limiting value, wherein:
- Fig. 1 is an axonometric view of the device of the invention when the closing lid is completely open;
- Fig. 2 is an axonometric view of the device of the invention when the closing lid is half-open;
- Fig. 3 is an axonometric view of the device of the invention, when the closing lid is half-open, with device and lid sectioned with a plane passing through the axis of rotation of the rototranslating pin, which is shown unsectioned;
- Fig. 4 is an axonometric view of the device of the invention, when the closing lid is half-open, with device and lid sectioned with a plane passing through the axis of rotation of the rototranslating pin, which is shown sectioned;
- Fig. 5 is an axonometric view of the device of the invention, when the closing lid is closed, with device and lid sectioned with a plane passing through the axis of rotation of the rototranslating pin, which is shown unsectioned;
- Fig. 6 is an axonometric view of the device of the invention, when the closing lid is closed, with device and lid sectioned with a plane passing through the axis of rotation of the rototranslating pin, which is shown sectioned;
- Fig. 7 is a sectional view of the device that corresponds to an enlargement of a detail of Fig. 6;
- Fig. 8 is an axonometric view of the device of the invention, when the closing lid is completing its closing travel and is pushing against said rototranslating pin;
- Fig. 9 is an axonometric view of said rototranslating pin.

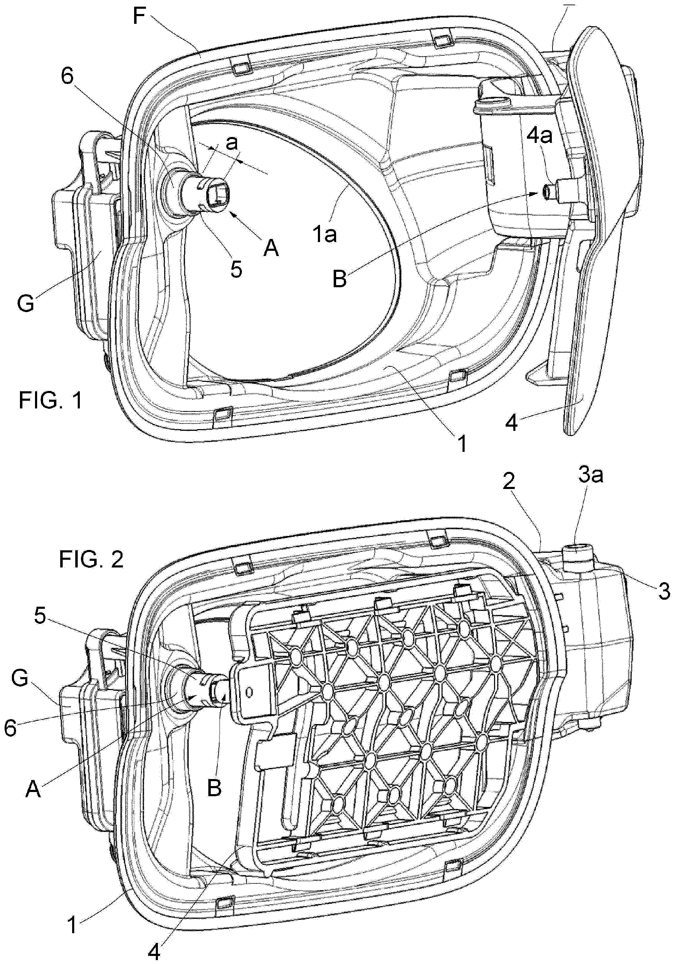

Referring to Figs. 1 and 2, the closing device of the invention comprises a bottom (1) adapted to be inserted into a hole obtained on the vehicle body. To that end, the bottom (1) is provided with a peripheral flange (F) for stopping and centering with respect to the hole of the body. Said flange (F) generates a mouth of the bottom. The bottom (1) comprises an external shelf (2) whereon a seat (3) is obtained for a pivoting pin (3a) of a lid (4) with suitable shape and size to close the mouth of the bottom (1).

Said bottom (1) is provided with a lower opening (1 a) where the delivery pipe leading to the fuel tank is inserted. In case of electrical vehicles, an electrical charging socket is provided in the opening (1 a) of the bottom.

An assembly (G) of known type is located on the back of said flange (F), comprising push-push lock, safety latch and actuator. The assembly (G) is located in opposite position to said shelf (2) used to hinge the lid (4).

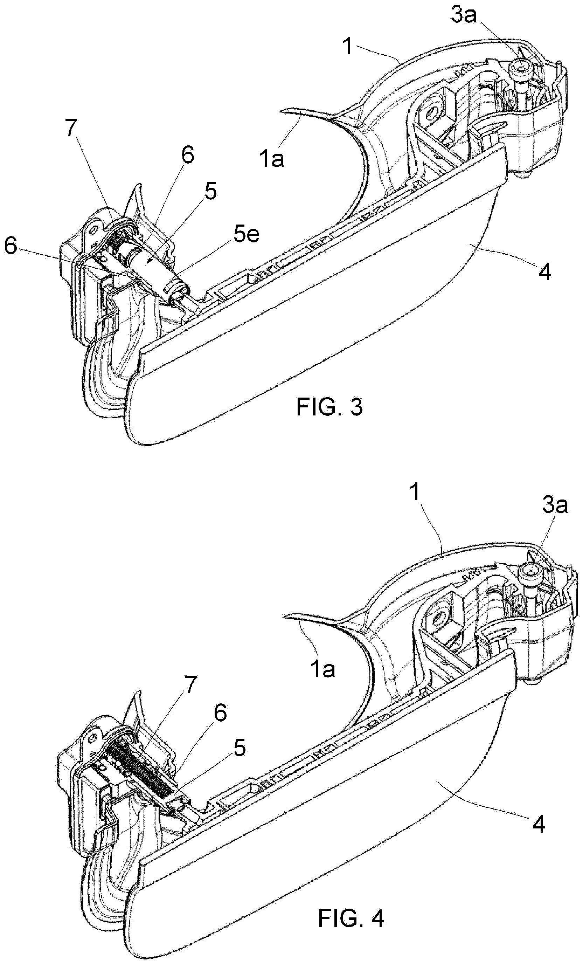

The device of the invention comprises an ordinary lock of push-push type, with rototranslating pin (5) axially sliding inside a cylindrical seat (6) acting as housing and guide for the rototranslating pin (5) obtained on the bottom (1). The seat (6) also houses a spring (7) (Fig. 4) that tends to eject said pin (5) from said cylindrical seat (6). The stop at the end of the extraction travel of said pin (5) is caused by its coupling with a stop lever mechanism (not shown in the figures) of the push-push lock.

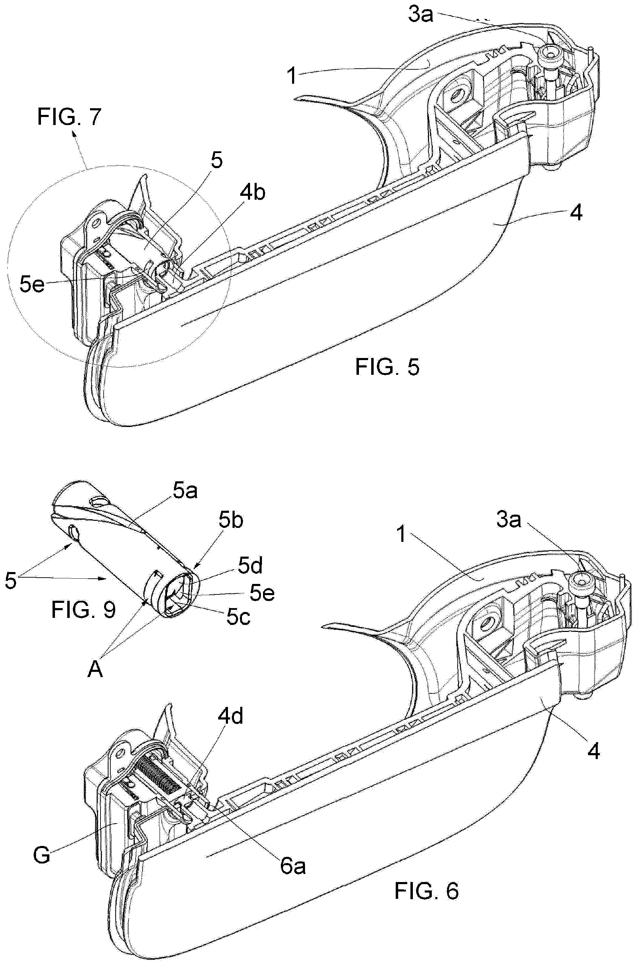

Referring to Fig. 9, the rototranslating pin (5) is provided on the external surface with a helical groove (5a), wherein a locking pin is inserted, protruding in internal position with respect to the cylindrical seat (6). In view of the above, the alternate axial travels of the pin (5) inside the cylindrical seat (6) are associated with inverse rotations of the pin around its longitudinal axis by an angle of approximately 90°.

The peculiarity of said rototranslating pin (5) is that, at the end facing the lid (4), it is provided with a tubular tip (5b) comprising retention means (A) adapted to interact with hooking means (B) (Figs. 1 and 2) protruding from the internal side of the lid (4).

As shown in Fig. 9, said tubular tip (5b) of the rototranslating pin is provided with an internal conduit (5c) having a substantially rectangular cross-section. Said internal conduit (5c) is blind, being closed in depth by a bottom wall (5d).

The lateral wall of said internal conduit (5c) is provided with a diametrically opposite pair of through slots (5e) internally ending in correspondence of the longer sides of the rectangular cross-section of the internal conduit (5c).

When the push-push lock is not actuated, that is to say when the pin (5) is in its position of maximum extraction from the seat (6), as shown in Figs. 1, 3 and 4, said tubular tip (5b) of the rototranslating pin protrudes from the cylindrical seat (6) by a preset length (a) lower than the length of the backward travel that must be given to the rototranslating pin (5) to actuate the stop lever mechanism of the push-push lock adapted to temporarily block the rototranslating pin (5) at the end of backward travel.

The tubular tip (5b) of the rototranslating pin is adapted to interface and cooperate with said hooking means (B), consisting in a finned peg (4a) protruding from the internal side of the lid (4).

Said finned peg (4a) of the hooking means comprises a stem (4b) and a diametrically opposite coplanar pair of transversal wings (4c) forming a sort of rectangular head (4d) that corresponds to the cross-section of said internal conduit (5c) of the tubular tip (5b) of the rototranslating pin.

The orientation of said opposite pair of transversal wings (4c) is such that, by pushing the lid (4) towards the bottom (1) to close the lid, said rectangular head (4d) of the hooking means is automatically inserted into the conduit (5c), stopping against said bottom wall (5d) of the rototranslating pin, as shown in Figs. 3 and 4.

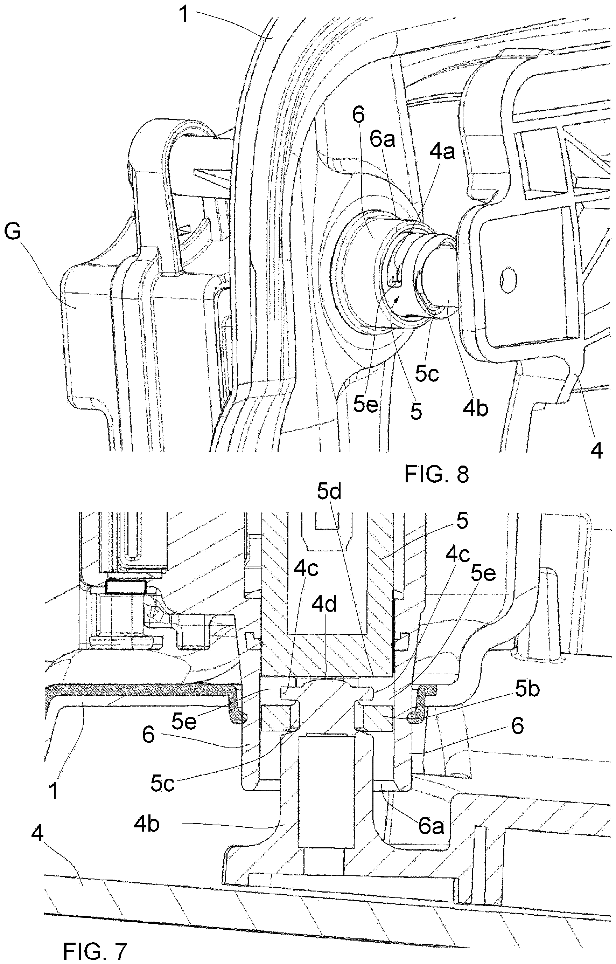

By keeping on pushing the lid (4) towards the bottom (1), because of the interference between rectangular head (4d) and bottom wall (5d), the pin (5) is moved backwards inside the seat (6), with consequent rotation of the pin (5) around its axis, as shown in Fig. 8.

When the pin (5) reaches the end of the backward travel, the push-push lock is automatically actuated, stopping the pin (5) in its position of maximum retraction, regardless of the ejection thrust of the spring (7).

When the pin (5) reaches the end of the backward travel, further to the rotation of the pin (5), the opposite pair of slots (5e) has received the opposite pair of wings (4c) of the finned peg (4a). In view of this, the lid (4) is held in closed position against the support bottom (1), as shown in Figs. 5, 6 and 7.

The length of the peg with finned head (4a) is such that by pushing the lid (4) towards the closing position, the peg (4a) penetrates inside said conduit (5c) of the rototranslating pin and moves forward beyond the mouth (6a) of the cylindrical seat (6), in such way to push the rototranslating pin (5) for a length longer than said preset length (a), sufficient to actuate the push-push lock.

For this reason, according to the improved closing device of the invention, it will be always impossible to actuate the safety latch if the lid (4) has not been closed previously.

In order to release the wings (4c) from the slots (5e), the lid (4) must be pressed against the bottom (1) so that the stem (5) makes an extra penetration travel inside the seat (6), automatically deactivating the push-push lock and making the tubular tip (5b) spontaneously come out of the seat (6) because of the ejection thrust exerted on the pin (5) by the spring (7).

## Claims

1. An improved device used to close the access compartment of delivery pipes of car fuel tanks, comprising a push-push lock comprising:
- a cylindrical seat (6) having a mouth (6a), and
- a rototranslating pin (5) sliding inside said cylindrical seat (6) acting as housing and guide for rototranslating pin (5), wherein said pin (5) can be in two stable stop positions, a first stop position of maximum retraction that corresponds to complete retraction of pin (5) inside said seat (6), and a second stop position of maximum extraction that corresponds to partial ejection of pin (5) from mouth (6a) of said cylindrical seat (6),
- retention means (A) obtained on a tip (5b) of the pin (5), and
- hooking means (B) protruding from the internal side of a closing lid (4), said hooking means (B) being suitable for engaging with said retention means (A) of the rototranslating pin,
wherein said rototranslating pin (5) performs a retraction travel from the second stop position of maximum extraction to the first stop position of maximum retraction, in order to actuate a stop lever mechanism of the push-push lock adapted to temporarily block the rototranslating pin (5) at the end of backward travel,
**characterized by** the fact that
when the pin (5) is at the end of its travel in position of maximum extraction, said tip (5b) of the pin protrudes from the mouth (6a) of the cylindrical seat (6) by a preset length (a) lower than the length of the backward travel that must be given to the rototranslating pin (5) to actuate the stop lever mechanism of the push-push lock adapted to temporarily block the rototranslating pin (5) at the end of backward travel.

2. A device according to claim 1, **characterized by** the fact that said retention means (A) comprise an internal conduit (5c) obtained in said tip (5b) of the rototranslating pin, said internal conduit (5c) having a substantially rectangular cross-section, whereas the lateral wall of said internal conduit (5c) is provided with a diametrically opposite pair of through slots (5e) internally ending in correspondence of the longer sides of said rectangular cross-section of the internal conduit (5c).

3. A device according to the preceding claim, **characterized by** the fact that said internal conduit (5c) is closed by a bottom wall (5d).

4. A device according to one or more of the preceding claims, **characterized by** the fact that said hooking means (B) protruding from the internal side of the closing lid (4) consist in a finned peg (4a) comprising a stem (4b) and a diametrically opposite coplanar pair of transversal wings (4c) forming a rectangular head (4d) corresponding to the cross-section of said internal conduit (5c) of the tubular tip (5b) of the rototranslating pin.

5. A device according to the preceding claim, **characterized by** the fact that the length of said peg (4a) with finned head is such that by pushing the lid (4) towards the closing position, the peg (4a) penetrates inside said conduit (5c) of the rototranslating pin and moves forward beyond the mouth (6a) of said cylindrical seat (6), in such way to push the rototranslating pin (5) for a length longer than said preset length (a), sufficient to actuate the push-push lock.

6. A device according to one or more of the preceding claims, **characterized by** the fact that said push-push lock is incorporated into an assembly (G) with lock, securing latch and actuator.

7. A device according to one or more of the preceding claims, **characterized by** the fact that it comprises a bottom (1) provided with a peripheral flange (F) generating a mouth and an external shelf (2) with a seat (3) for a pivoting pin (3a) of said lid (4), said lid (4) having suitable shape and size to close the mouth of said bottom (1).

8. A device according to claim 6 and 7, **characterized by** the fact that said assembly (G) is located at the back of the flange (F) of the bottom, in opposite position to said shelf (2) used to hinge the lid (4).

## Patentansprüche

1. Verbesserte Vorrichtung zum Verschließen des Zugangsraums zum Zuführungsrohr des Treibstofftanks von Kraftfahrzeugen, umfassend einen Push-Push-Verschluss, umfassend:
- einen Zylindersitz (6), der eine Einmündung (6a) aufweist, und
- einen Dreh-Schwenk-Bolzen (5), der im Inneren des Zylindersitzes (6) verschiebbar ist und als Gehäuse und Führung des Dreh-Schwenk-Bolzens (5) dient, bei dem der Bolzen (5) zwei feste Endanschlagpositionen einnehmen kann, eine erste maximale Rückzugsposition, in der der Bolzen (5) vollständig ins Innere des Sitzes (6) zurückgezogen ist, und eine zweite maximale Auszugsposition, in der der Bolzen (5) teilweise aus der Einmündung (6a) des Zylindersitzes (6) herausgezogen ist,
- Haltemittel (A), die an einer Spitze (5b) des Bolzens (5) herausgearbeitet sind; und
- Einhängemittel (B), die aus der Innenseite eines Verschlussdeckels (4) auskragen und dazu geeignet sind, mit den Haltemitteln (A) des Dreh-Schwenk-Bolzens (5) zusammenzuwirken,
wobei der Dreh-Schwenk-Bolzen (5) einen Rückzugshub aus der zweiten maximalen Auszugsposition zur ersten maximalen Rückzugsposition ausführt, um einen Stopphebel-Mechanismus des Push-Push-Verschlusses zu betätigen, der dazu dient, den Dreh-Schwenk-Bolzen (5) am Ende des Rückzugshubs vorübergehend zu blockieren,
**dadurch gekennzeichnet, dass**
die Spitze (5b) des Bolzens (5), wenn dieser sich am Ende seiner maximalen Auszugsposition befindet, aus der Einmündung (6a) des Zylindersitzes um einen zuvor festgelegten Abschnitt a) auskragt, der geringer als der des Rückzugshubs ist, der erforderlich ist, damit der Dreh-Schwenk-Bolzen (5) den Stopphebel-Mechanismus des Push-Push-Verschlusses betätigt, der dazu dient, den Dreh-Schwenk-Bolzen (5) am Ende des Rückzugshubs vorübergehend zu blockieren.

2. Vorrichtung nach Anspruch 1, **dadurch gekennzeichnet, dass** die Haltemittel (A) ein inneres Rohr (5c) umfassen, das an der Spitze (5b) des Dreh-Schwenk-Bolzens herausgearbeitet ist, wobei das innere Rohr (5c) einen im Wesentlichen rechteckigen Querschnitt aufweist, wobei die Seitenwand des inneren Rohrs (5c) mit einem Paar von diametral gegenüberliegenden, durchgehenden Langlöchern (5e) versehen ist, die inwendig an den längeren Seiten des rechteckigen Querschnitts des inneren Rohrs (5c) enden.

3. Vorrichtung nach dem vorstehenden Anspruch, **dadurch gekennzeichnet, dass** das innere Rohr (5c) durch eine Bodenwand (5d) verschlossen ist.

4. Vorrichtung nach einem oder mehreren der vorstehenden Ansprüche, **dadurch gekennzeichnet, dass** die aus der Innenseite des Verschlussdeckels (4) auskragenden Einhängemittel (B) aus einem verrippten Zapfen (4a) besteht, umfassend einen Schaft (4b) und ein Paar von diametral gegenüberliegenden, koplanaren Querrippen (4c), die zusammen einen rechteckigen Kopf (4d) bilden, der dem Querschnitt des inneren Rohrs (5c) der rohrförmigen Spitze (5b) des Dreh-Schwenk-Bolzens entspricht.

5. Vorrichtung nach dem vorstehenden Anspruch, **dadurch gekennzeichnet, dass** die Länge des Zapfens (4a) mit verripptem Kopf derart ist, dass beim Drücken des Deckels (4) in Richtung seiner Verschlussposition der Zapfen (4a) ins Innere des Rohrs (5c) des Dreh-Schwenk-Bolzens eindringt und über die Einmündung (6a) des Zylindersitzes (6) hinaus derart hinausragt, dass der Dreh-Schwenk-Bolzen (5) um einen längeren als den zuvor festgelegten Abschnitt (a) vorgeschoben wird, der ausreicht, um den Push-Push-Verschluss zu betätigen.

6. Vorrichtung nach einem der vorstehenden Ansprüche, **dadurch gekennzeichnet, dass** der Push-Push-Verschluss im Inneren einer Gruppe (G) eingebaut ist, die den Verschluss, einen Sicherheitsriegel und einen entsprechenden Betätigungsaktuator umfasst.

7. Vorrichtung nach einem oder mehreren der vorstehenden Ansprüche, **dadurch gekennzeichnet, dass** sie einen Sockel (1) umfasst, der mit einem umlaufenden Flansch (F) versehen ist, der eine Einmündung und eine äußere Konsole (2) definiert, in der ein Sitz (3) für einen Drehzapfen (3a) des Deckels (4) herausgearbeitet ist, dessen Form und Abmessungen dazu geeignet sind, die Einmündung des Sockels (1) zu verschließen.

8. Vorrichtung nach den Ansprüchen 6 und 7, **dadurch gekennzeichnet, dass** die Gruppe (G) auf der Rückseite des Sockelflansches (F), der Konsole (2) gegenüberliegend positioniert ist, an welcher der Deckel (4) angelenkt ist.

## Revendications

1. Dispositif perfectionné pour la fermeture du compartiment d'accès au tuyau de refoulement du réservoir à carburant des voitures, comprenant une serrure du type « push-push » comprenant :
- un siège cylindrique (6) ayant une embouchure (6a), et
- un goujon louvoyant-coulissant (5) à l'intérieur du dit siège cylindrique (6) fonctionnant en tant qu'emplacement et guide du goujon louvoyant coulissant (5), où ledit goujon (5) peut assumer deux positions stables de fin de course, une première position de recul maximal correspondante à la rétraction complète du goujon (5) à l'intérieur du dit siège (6) ; une seconde position d'avancement maximal correspondante à l'expulsion partielle du goujon (5) de l'embouchure (6a) du dit siège cylindrique (6),
- des moyens de retenue (A) réalisés sur une pointe (5b) du goujon (5) ; et
- des moyens d'accrochage (B) faisant saillie depuis le côté interne d'un portillon de fermeture (4) et aptes à interagir avec lesdits moyens de retenue (A) du goujon louvoyant-coulissant (5),
où ledit goujon louvoyant-coulissant (5) effectue une course de recul depuis la seconde position d'avancement maximale à la première position de recul maximal pour faire armer un engrenage à levier d'arrêt de la serrure du type « push-push », préposé à bloquer temporairement le goujon louvoyant-coulissant (5) sur sa fin de course de recul,
**caractérisé en ce que**
lorsque le goujon (5) stationne en fin de course sur sa position d'avancement maximal, ladite pointe (5b) du goujon déborde de l'embouchure (6a) du dit siège cylindrique (6) d'un segment prédéterminé (a) inférieur à la course de recul qu'il faut nécessairement imposer au dit goujon louvoyant-coulissant (5) pour faire armer l'engrenage à levier d'arrêt de la serrure du type « push-push », préposé à bloquer temporairement le goujon louvoyant-coulissant (5) à sa fin de course de recul.

2. Dispositif selon la revendication 1, **caractérisé en ce que** lesdits moyens de retenue (A) comprennent un conduit interne (5c) réalisé dans ladite pointe (5b) du goujon louvoyant-coulissant, ledit conduit interne (5c) ayant une section transversale de forme pratiquement rectangulaire, sur la paroi latérale du dit conduit interne (5c) étant prévue une paire diamétralement opposée de fentes passantes (5e), qui internement débouchent en correspondance de ladite section transversale rectangulaire du conduit interne (5c).

3. Dispositif selon la revendication précédente, **caractérisé en ce que** ledit conduit interne (5c) est fermé en profondeur par une paroi de fond (5d).

4. Dispositif selon l'une ou plusieurs des revendications précédentes, **caractérisé en ce que** lesdits moyens d'accrochage (B) qui font saillie depuis le côté interne du portillon de fermeture (4) consistent en un pieu à ailettes (4a) comprenant une tige (4b) et une paire diamétralement opposée et coplanaire d'ailettes transversales (4c), qui ensemble forment une tête rectangulaire (4d), conforme à la section transversale du dit conduit interne (5c) de la pointe tubulaire (5b) du goujon louvoyant-coulissant.

5. Dispositif selon la revendication précédente, **caractérisé en ce que** la longueur du dit pieu avec tête à ailettes (4a) est telle qu'en poussant le portillon (4) vers sa position de fermeture, le pieu (4a) pénètre à l'intérieur du dit conduit (5c) du goujon louvoyant-coulissant et avance au-delà de l'embouchure (6a) du dit siège cylindrique (6), de façon à pousser le goujon louvoyant-coulissant (5) pour un segment majeur du dit segment prédéterminé (a), suffisant pour faire armer la serrure du type « push-push ».

6. Dispositif selon l'une ou plusieurs des revendications précédentes, **caractérisé en ce que** ladite serrure du type « push-push » est incorporée dans un groupe (G) qui prévoit la serrure même, un verrouillage de sécurité et un actionneur.

7. Dispositif selon l'une ou plusieurs des revendications précédentes, **caractérisé en ce qu'**il comprend un fond moulé (1) ayant une bride de périmètre (F) qui définit une embouchure et une console externe (2) dans laquelle est réalisé un siège (3) pour un goujon de pivotement (3a) du dit portillon (4), ledit portillon (4) ayant forme et dimensions telles lui permettant de fermer l'embouchure du dit fond (1).

8. Dispositif selon les revendications 6 et 7, **caractérisé en ce que** ledit groupe (G) est positionné sur la face arrière de ladite bride (F) du fond, sur le côté opposé à celui de ladite console (2) d'articulation du portillon (4).
